# EUROPEAN PATENT APPLICATION

(11) **EP 4 152 809 A1**
(43) Date of publication of application: **22.03.2023**
(21) Application number: 22196302.8
(22) Date of filing: 19.09.2022
(51) Int. Cl.: H04W 28/02

(54) **OPTIMIZATION IN OCI HANDLING**

(30) Priority: 20.09.2021 IN 202121042582; 13.09.2022 US 202217943308
(71) Applicant: Mavenir Systems, Inc., Richardson, TX 75081 (US)
(72) Inventor: GARIKIPATI, Srinivas, 560064 Yelahanka (IN); PADLIKAR, Vipin, 560048 Bangalore (IN)
(74) Representative: Studio Torta S.p.A.

(57) **Abstract**

A method of optimizing Overload Control Information (OCI) handling for a Control Plane (CP) that has a first association with a first User Plane (UP 1) and a second association with a second User Plane (UP 2) includes: upon receiving from UP 1 an OCI containing i) overload reduction metric defining a target number of sessions for the first association, and ii) a specified period of validity for the OCI handling, initiating a timer for the period of validity for the OCI handling; periodically checking the number of sessions currently being handled by the first association; initiating new sessions with UP 1 if the number of sessions currently being handled by the first association is below the target number of sessions; and not initiating new sessions with the UP 1 if the number of sessions currently being handled by the first association is above the target number of sessions.

## Description

### BACKGROUND OF THE DISCLOSURE

### Field of the Disclosure

The present disclosure relates to 5th Generation Core (5GC) network operation, and relates more particularly to optimizing Overload Control Information (OCI) handling in 5GC networks.

### Description of the Related Art

In a Service-Based Architecture of 5GC, a service is provided when various Network Functions (NFs) communicate to each other efficiently and effectively in connection with the micro-service that they are offering, thus enabling guaranteed service to the end consumer. There are scenarios in which certain NFs are overloaded, and the overloaded status information at the NF needs to be shared with the consumer of the micro-service, thus enabling the consumer to act accordingly and find an alternate NF providing the same micro-service.

A similar problem is seen over a communication interface between the Control Plane (CP) and User Plane (UP), e.g., between a UP Function (UPF) (a producer) and a Session Management Function (SMF) (a consumer) on the CP side, which CP includes the network function that controls the UP by instructing the UP. UPF performs operations such as Packet routing and forwarding, Packet inspection, maintaining PDU session, Policy enforcement for UP, quality of service (QoS) handling, among others. SMF performs operations such as Service registration and discovery, IP address allocation and management for user equipment (UE), UP selection, session management, QoS and Policy enforcement for CP, among others. CP communicates to UP over a communication interface, and in the case of UP being overloaded, the UP shall instruct the CP to reduce the load towards the UP by passing OCI information as part of a message to CP. This OCI includes Overload Reduction Metric (ORM) and Period of Validity that CP shall adhere to. Overload Reduction Metric (ORM) indicates that the CP has to reduce the load by a scalar percentage value, e.g., if the ORM value is 10 and the current load is 200, CP shall reduce the load by, e.g., 10%, which means that the load shall come down to 180.

How the above-mentioned reduction is carried out is implementation-specific, which involves enabling of rejecting of messages, which is an expensive handling procedure considering the network resources involved. For example, if all message types such as Modification and Release are stopped from sending to the UP by considering them as rejection, there shall be additional handling at the other NFs to clear the sessions (e.g., at Policy Control Function (PCF), Charging Function (CHF), Access and Mobility Management Function (AMF), etc.), thus initiating inelegant clearing of sessions requiring resource utilization at various NFs.

Therefore, there is a need for an improved method for optimizing OCI handling.

### SUMMARY OF THE DISCLOSURE

The present disclosure provides a method of optimization using the current concurrent sessions that a pair of CP and UP associations are handling and not attaching further associations until a specified percentage (e.g., 10 percentage reduction in an example) in sessions is achieved, which action shall be applied until the end of the Period of Validity (e.g., in seconds) as provided in OCI. The example method according to the present disclosure can be extended to other Service Based interfaces of a Packet core network, or in general, to any interface between a Service Consumer and a Service Producer.

### BRIEF DESCRIPTION OF THE FIGURE

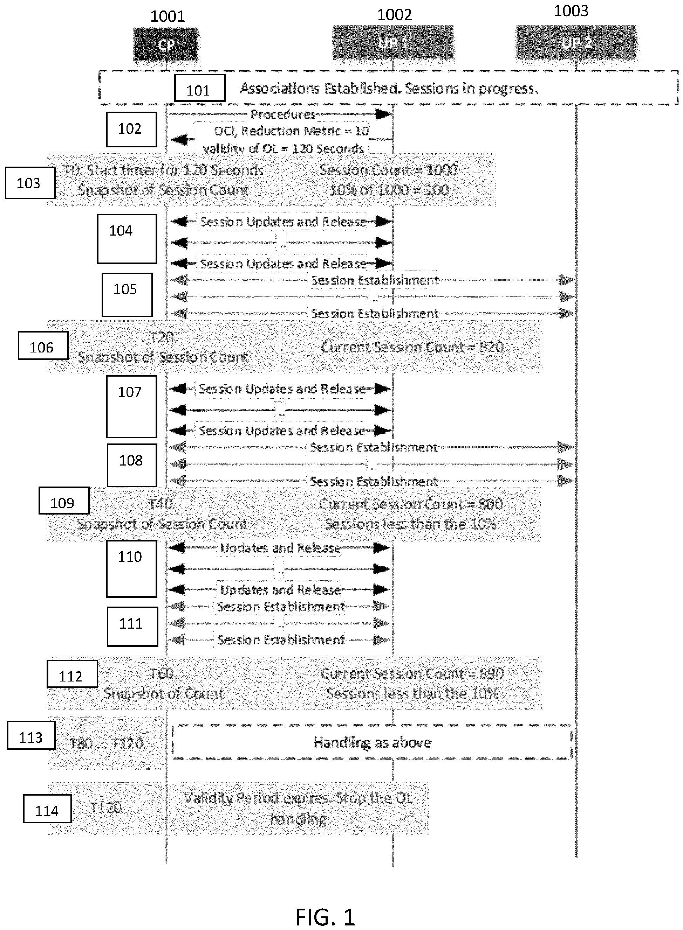

FIG. 1 is a signal flow diagram illustrating an example embodiment of the method for optimizing OCI handing according to the present disclosure.

### DETAILED DESCRIPTION

The association between CP and UP handles multiple Sessions enabling respective PDU sessions and smooth data transfer between the UE and the Data Network (DN). When a UP is overloaded, e.g., as identified by the UP's internal overload identification mechanism, the internal overload identification mechanism shall indicate to the associated CP to reduce the load by X percentage (e.g., 10 %) specified in Overload Reduction Metric. The associated CP shall try and reduce the load by X percentage during the duration of Period of Validity time defined in seconds. Considering that the relevant specification 3GPP TS 29.244 for 5GC enables rejecting the messages to handle the Overload reduction at the CP, reducing the transactions per second (TPS) by reducing new session procedures, Update Procedures and/or Release procedures would call for major handling at various north-bound and/or adjacent NFs.

As illustrated in Fig. 1, the following is an example method for optimizing OCI handling according to the present disclosure. As shown at block 101, CP 1001 already has associations established with both UP 1 1002 and UP 2 1003. As shown at block 102, UP 1 1002 has sent to CP 1001 an OCI with overload reduction metric of 10 and a period of validity of 120 seconds. As shown at block 103, upon receipt of the OCI at T0, CP 1001 initiates and maintains a timer for UP 1 1002 lasting 120 seconds (period of validity). This timer shall be re-started if there is a new OCI indicated by UP 1 1002. CP 1001 shall take a snapshot of the number of sessions that the pair CP - UP 1 are handling currently. In this example, 1000 sessions are being handled by this association between CP 1001 and UP1 1002, so 10% reduction in metric = 10% of 1000 = 100. Since load reduction is expected to be reduced by 100, CP 1001 shall continue to send modification and delete procedures to UP 1 1002, as shown at block 104. Meanwhile, as shown at block 105, CP 1001 continues to initiate new sessions with UP 2 1003. This approach continues, until either i) CP 1001 takes the next snapshot or ii) the started timer of 120 seconds elapses.

As shown at block 106, at T20, CP 1001 takes a snapshot and identifies the number of sessions that the pair CP - UP 1 are handling. In this example, 920 sessions are being handled at T20 by this association between CP 1001 and UP 1 1002, which number of current sessions is more than the reduction-metric-based target number of sessions, 900. Therefore, as shown at block 107, CP shall continue to send modification and delete procedures to UP 1 1002. Meanwhile, as shown at block 108, CP 1001 continues to initiate new sessions with UP 2 1003. As shown at block 109, at T40, CP 1001 takes a snapshot of the number of sessions that the pair CP - UP 1 are currently handling. In this example, 800 sessions are being handled by this association between CP 1001 and UP 1 1002, which number of current sessions is less than the reduction-metric-based target number of sessions, 900. As shown at block 110, CP 1001 shall continue to send modification and delete procedures to UP 1 1002, and CP 1001 can initiate new sessions with UP 1 1002, as shown at block 111.

As shown at block 112, at T60, CP 1001 takes a snapshot and identifies the number of sessions that the pair CP - UP 1 are currently handling. In this example, 890 sessions are being handled by this association between CP 1001 and UP1 1002, which number of current sessions is less than the reduction-metric-based target number of sessions, 900. As shown at block 113, the handling performed at blocks 110 and 111 is continued, i.e., CP 1001 shall continue to send modification and delete procedures to UP 1 1002, and CP 1001 can initiate new sessions with UP 1 1002.

When the number of current sessions is near the reduction-metric-based target number of sessions, 900, CP 1001 shall continue to send modification and delete procedures to the UP 1 1002, while new sessions can be initiated with UP 2 1003. This process continues until the end of the period of validity (120 seconds), which is shown at block 114 as T120, at which point in time the CP 1001 will start operating normally as there is no OCI triggered by UP (i.e., UP1 or UP 2).

Optimizing the OCI handling using the above-described example method enables less processing and more efficient OCI handling during overload conditions. The OCI handling implementation according to the present disclosure can be used for all CUPS (Control and User Plane Separation)-based deployments/interfaces for 4G (LTE) and 5GC, and also at an interface between the Service Consumer and the Service Producer defined in 3GPP TS 29.500. The optimization method according to the present disclosure achieves an elegant solution to the complex problem of OCI handling with minimal changes in the handling.

## Claims

1. A method of optimizing Overload Control Information (OCI) handling in one of 4^{th} Generation (4G) network or 5^{th} Generation Core (5GC) network in which a Control Plane (CP) has a first association with a first User Plane (UP 1) and a second association with a second User Plane (UP 2), the method comprising:
receiving, at an initial time point T0 by the CP from the UP 1, an OCI containing i) overload reduction metric defining a specified percentage reduction of a number of sessions handled by the first association such that a target number of sessions for the first association is achieved, and ii) a specified period of validity for the OCI handling;
initiating, by the CP, a timer for a specified period of time corresponding to the period of validity for the OCI handling; and
sending, by the CP, at least one of modification and delete procedures to the UP 1, without initiating new sessions with the UP 1, as part of the OCI handling;

2. The method according to claim 1, further comprising:
periodically checking, by the CP, at subsequent time points T1 through Tn, wherein Tn = the end of the period of validity for OCI, the number of sessions currently being handled by the first association.

3. The method according to claim 1, further comprising:
at least one of:
a) initiating, by the CP, new sessions with UP 1, if the number of sessions currently being handled by the first association is below the target number of sessions and the period of validity for the OCI handling has not expired; and
b) sending, by the CP, at least one of additional modification and delete procedures to the UP 1, without initiating new sessions with the UP 1, if the number of sessions currently being handled by the first association is above the target number of sessions and the period of validity for the OCI handling has not expired.

4. The method of claim 1, further comprising:
ending the OCI handling at the end of the period of validity for the OCI handling.

5. The method of claim 1, further comprising:
initiating, by the CP, new sessions with UP 2, during the period of validity for the OCI handling, if the number of sessions currently being handled by the first association is above the target number of sessions for the first association.

6. The method according to claim 2, further comprising:
at least one of:
a) initiating, by the CP, new sessions with UP 1, if the number of sessions currently being handled by the first association is below the target number of sessions and the period of validity for the OCI handling has not expired; and
b) sending, by the CP, at least one of additional modification and delete procedures to the UP 1, without initiating new sessions with the UP 1, if the number of sessions currently being handled by the first association is above the target number of sessions and the period of validity for the OCI handling has not expired.

7. The method of claim 6, further comprising:
ending the OCI handling at the end of the period of validity for the OCI handling.

8. The method of claim 6, further comprising:
initiating, by the CP, new sessions with UP 2, during the period of validity for the OCI handling, if the number of sessions currently being handled by the first association is above the target number of sessions for the first association.

9. The method of claim 2, further comprising:
ending the OCI handling at the end of the period of validity for the OCI handling.

10. The method of claim 2, further comprising:
initiating, by the CP, new sessions with UP 2, during the period of validity for the OCI handling, if the number of sessions currently being handled by the first association is above the target number of sessions for the first association.

11. The method according to claim 1, further comprising:
initiating, by the CP, new sessions with UP 1, if the number of sessions currently being handled by the first association is below the target number of sessions and the period of validity for the OCI handling has not expired.

12. The method according to claim 11, further comprising:
sending, by the CP, at least one of additional modification and delete procedures to the UP 1, without initiating new sessions with the UP 1, if the number of sessions currently being handled by the first association is above the target number of sessions and the period of validity for the OCI handling has not expired.

13. The method according to claim 12, further comprising:
periodically checking, by the CP, at subsequent time points T1 through Tn, wherein Tn = the end of the period of validity for OCI, the number of sessions currently being handled by the first association.

14. The method of claim 13, further comprising:
ending the OCI handling at the end of the period of validity for the OCI handling.

15. The method of claim 13, further comprising:
initiating, by the CP, new sessions with UP 2, during the period of validity for the OCI handling, if the number of sessions currently being handled by the first association is above the target number of sessions for the first association.
